# EUROPEAN PATENT SPECIFICATION

(11) **EP 0 363 281 B1**
(45) Date of publication and mention of the grant of the patent: **28.05.1997**
(21) Application number: 89402742.4
(22) Date of filing: 04.10.1989
(51) Int. Cl.: G02C 13/00, B24B 9/14

(54) **Lens meter**
Linsemesser
Mesureur de lentille

(30) Priority: 05.10.1988 JP 251436/88; 24.01.1989 JP 14356/89
(43) Date of publication of application: 11.04.1990
(60) Divisional application: 96202830.4
(73) Proprietor: Kabushiki Kaisha TOPCON, Tokyo (JP)
(72) Inventor: Ishihara, Taketoshi c/o Kabusiki Kaisha TOPCON, Tokyo (JP)
(74) Representative: Signore, Robert

(56) References cited:
- EP-A- 0 061 918
- EP-A- 0 160 985
- EP-A- 0 260 710
- GB-A- 2 165 976
- US-A- 4 730 260
- PATENT ABSTRACTS OF JAPAN, vol. 9, no. 133 (P-362)[1856], 8th June 1985; & JP-A-60 15 623

## Description

### BACKGROUND OF THE INVENTION

### Field of the Invention:

This invention relates to a lens meter capable of measuring optical characteristics of a lens to be machined or processed, making a "YES" or "NO" judgment for processing the lens in accordance with a lens processing data and mounting a processing jig to the lens.

### Description of the Prior Art:

In general, when spectacles are made, refractivity, astigmatism axis, etc. of the client's eye are measured first and then a prescription data is prepared based on this measurement. In the meantime, the client is given a chance to select his favorite lens frame, the kind of lenses, etc. and such obtained information is sent to a machining or processing factory or the like. In the processing factory, a lens to be processed is selected based on the above-mentioned information and the orientation of the astigmatism axis of such selected lens, optical center (optical axis), etc. are measured by a lens meter. At the same time, a marking is applied to the lens based on the above-mentioned measurement so that when the processed lens is put into the lens frame, the astigmatism axis would be oriented in a predetermined direction.

Next, a lens mold (template) is put on the lens to align the optical axes, the orientation of the astigmatism axis, etc. thereof in order to confirm whether the peripheral edge of the lens mold comes out of the peripheral edge of the lens, that is, whether the basis material will become short. In other words, the "YES" or "NO" judgment for performing the processing work is confirmed (hereinafter referred to as the "processing "yes" or "no" confirmation work"). There are two types for performing this processing "yes" or "no" confirmation work, one is of a direct sight type in which a direct visual confirmation is performed and the other is of a projection type.

And, in this confirmation work, since the processing is not possible when the peripheral edge of the lens mold comes out of the peripheral edge of the lens, it is required to exchange the lens with another lens having a larger diameter. On the other hand, as the lens can be processed when the peripheral edge of the lens mold does not come out of the peripheral edge of the lens, a suction plate as a processing jig is mounted on the lens, and this suction plate is mounted on a lens holding shaft of a lens grinder.

By the way, as the application of the marking to the lens and the mounting of the jig on the lens were effected by separate devices, there was such a problem as that errors were occurred in alignment of the axes when the jig was mounted on the lens.

Also, there was such a problem as that when the processing "yes" or "no" confirmation work is performed for a lens having a strong astigmatism in accordance with the projection type, axial errors were likely to occur in a projection image of the marking.

Furthermore, there was such a problem as that in accordance with the direct sight type, parallax is likely to occur to jeopardize a correct observation.

In addition, in recent years, there was developed a lens grinder in which when the lens (ophthalmic lens) is grind processed into the configuration of a spectacle frame, the lens plate (mold plate) is not used and data of the configuration of the lens to be processed is memorized in CPU, etc. beforehand so that the lens is moved upward and downward with respect to a grinding wheel based on the memorized data. As no lens plate is used when the lens is grind processed, the processing "yes" or "no" confirmation work for confirming whether the lens will become short in basis material cannot be performed using the lens plate after the optical characteristics of the lens is measured by the lens meter as mentioned. Therefore, this processing "yes" or "no" confirmation work was difficult to carry out.

In other respects document EP-A-0 160 985 discloses a device for calculating relationship between a pre-edged lens and a spectacle lens. Nevertheless, in this document the characteristics of the semi-finished lens are exclusively measured by mechanical means.

### SUMMARY OF THE INVENTION

The object of the present invention is to provide a lens meter capable of making a "YES" or "NO" judgement for processing a lens to be processed and mounting the jig on the lens with ease and with correctness irrespective of the provision of a lens plate.

In order to achieve this object, the present invention provides a lens meter as claimed in one of claim 1 and 8 and subclaims.

Thus the lens meter of the present invention includes :
- means for measuring the optical characteristics of a lens to be processed,
- means for inputting information about the radius of the outer periphery of said lens ;
- means for inputting information about the shape of a spectacle frame ;
- display means for compositely displaying said lens and a lens rim of said spectacle frame based upon said respective information ; and
- means for mounting a processing jig on said lens measured by said measuring means.

According to another embodiment of the invention the lens meter includes :
- a lens platform on which a lens to be processed is mounted and means for measuring the optical characteristics of the lens mounted on said lens platform,
- means for inputting information about the shape of a spectacle frame,
- means for inputting a distance between the centers of lens rims of a pair of spectacles and a distance between the pupils of a person wearing said spectacles or inputting a difference between said rim distance and said pupil distance,
- display means for displaying the optical characteristics of the lens measured by said measuring means and the shape of the spectacle frame input by said means for inputting information about the shape of the spectacle frame,
- a first observation optical path for observing a display of said display means,
- a second observation optical path for observing the peripheral configuration and surfaces of the lens mounted on said lens platform, and
- means for mounting a processing jig on said lens measured by said measuring means,
said first and second observation optical paths sharing a common optical path for observing the display of said display means and the lens mounted on said lens platform compositely and simultaneously.

Other objects, features and advantages of the present invention will be well appreciated upon reading of the following description of the invention when taken in conjunction with the attached drawings with understanding that some modifications, variations and changes of the same could be made by the skilled person in the art to which the invention pertains without departing from the scope of the invention as claimed.

### BRIEF DESCRIPTION OF THE ATTACHED DRAWINGS

Fig. 1 is a perspective view showing a first embodiment of a lens meter according to the present invention.

Fig. 2 is a circuit diagram showing a connecting relation between a control circuit in the lens meter of Fig. 1 and other equipment.

Fig. 3 is an explanatory view showing a relation between the lens meter of Fig. 1 and other equipment.

Fig. 4 is an explanatory view of a frame PD of a spectacle frame.

Fig. 5 is an explanatory view of an pupil PD of the person wearing the spectacles.

Fig. 6 is an explanatory view showing a relation between a lens frame, and an appointment and an astigmatism axis.

Fig. 7 is an explanatory view showing a relation between the optical center of the lens and a cylindrical axis.

Fig. 8 is an explanatory view showing a relation between the lens and the lens frame of the spectacle frame.

Fig. 9 is a perspective view of an adapter for a lens platform which is used in the present invention.

Fig. 10 is a sectional view taken along line VIII-VIII of Fig. 9.

Fig. 11 is a perspective view showing a second embodiment of a lens meter according to the present invention.

Fig. 12 is an optical path of the lens meter of Fig. 11.

Fig. 13 is an explanatory view showing a projecting image.

Fig. 14 is an explanatory view showing the lens frame, etc. displayed.

Fig. 15 is an explanatory view showing the orientation of the astigmatism displayed.

Fig. 16 is an explanatory view showing the lens (double focus lens).

### DESCRIPTION OF THE PREFERRED EMBODIMENT

The present invention will be described hereunder with reference to the drawings.

### [First Embodiment]

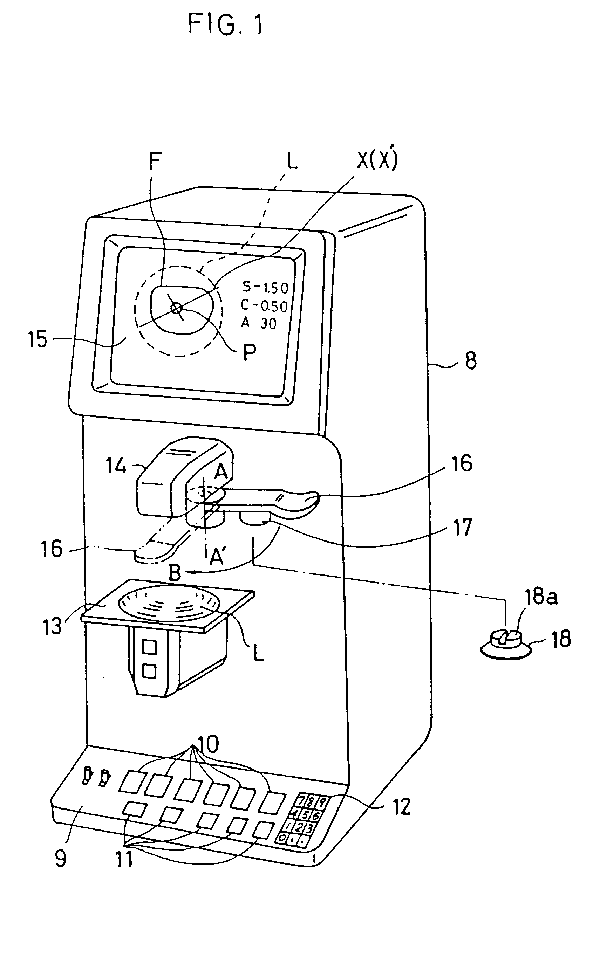

Figs. 1 through 10 show the first embodiment.

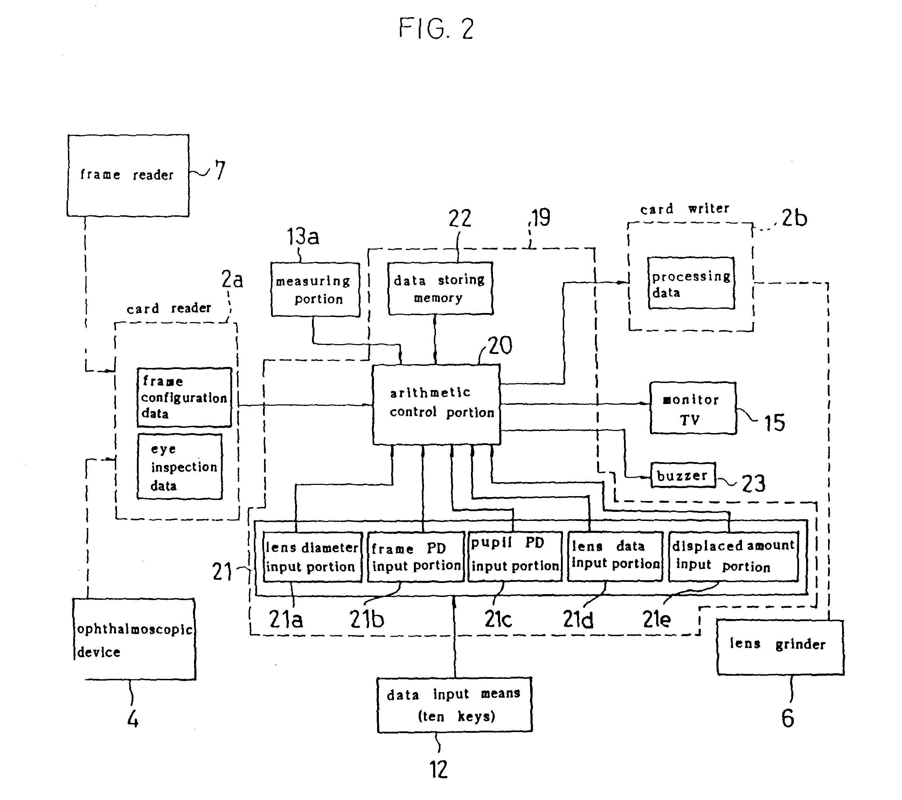

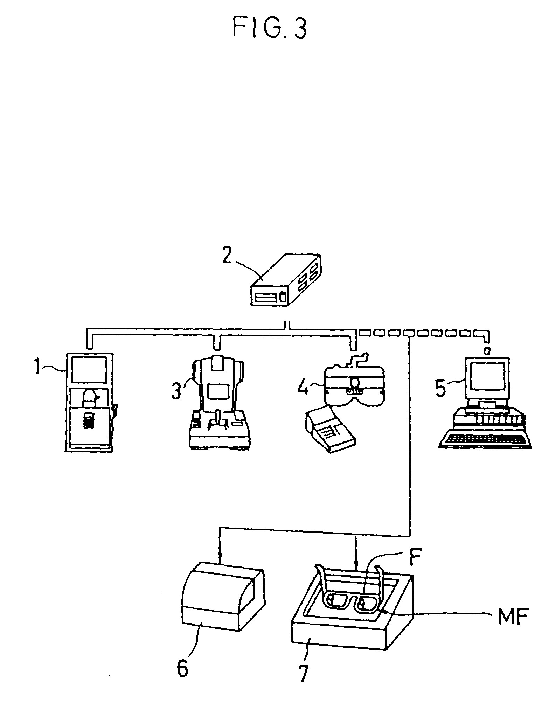

In Figs. 1 and 3, the numeral 1 denotes a lens meter of the present invention. Similarly, in Fig. 3, the numeral 2 denotes an IC card data record reproducing apparatus comprising an IC card reader 2a and an IC read writer 2b of Fig. 2, 3 an objective ophthalmoscopic device, 4a subjective ophthalmoscopic device, 5 a computer for controlling clients, 6 a lens grinder for processing the configuration of a lens L to be processed, and 7 a frame reader for measuring the configuration of a lens frame of the spectacle frame, the distance between the lens frames, the frame PD, etc. The lens meter 1, the data record reproducing apparatus 2, the objective ophthalmoscopic device 3, the subjective ophthalmoscopic device 4, the clients controlling computer 5, the lens grinder 6, etc. are designed as such that they can transmit information with one another.

A body 8 of the lens meter of Fig. 3 is provided on a lower portion of its front surface with a key board 9 as shown in Fig. 1. This key board 9 includes a plurality of operation switches 10 which are used when the optical characteristics of the lens are measured, a plurality of switches 11 for setting data input modes, and ten keys 12 for inputting numeric values as data. Also, the body 8 is provided on the center of its front surface with a lens platform 13 containing therein a measuring portion 13a (measuring means) of Fig. 2 for measuring the lens configuration.

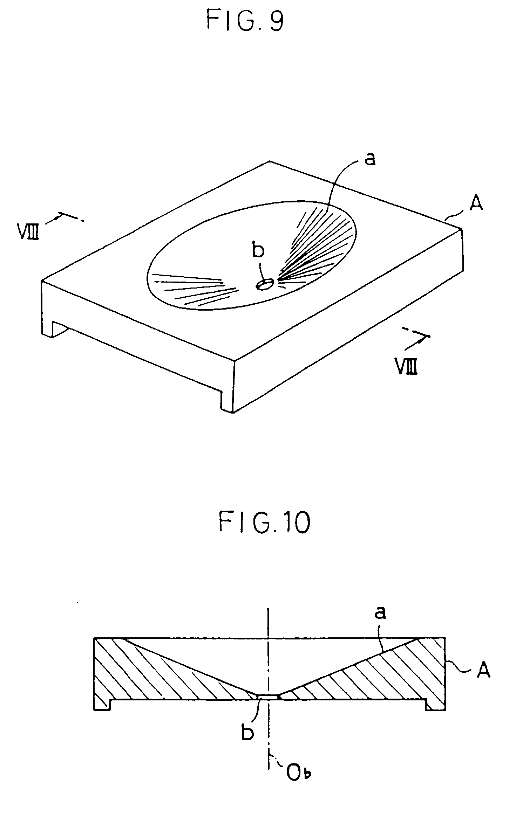

A lens platform adapter A as shown in Figs. 9 and 10 can be mounted on this lens platform 13. The adapter A has a bowl-shaped recess portion a formed in its center, and the recess portion a has a tiny hole b formed in its center. And when the adapter A is mounted on the lens platform 13 for use, the center of the recess portion a, that is, the center Ob of the tiny hole b is brought to be coincident with the center of the measuring portion 13a. In this state, the lens L is mounted in the recess portion a and by measuring the optical characteristics in the center of the external configuration of the processing lens L, the optical center can be calculated by arithmetic means as will be described with reference to the prism quantity. In accordance with this, it can also cope with the lens the optical center of which is displaced from the center of its external configuration.

Also, above the lens platform 13, a mounting projection portion 14 integral with the body 8 is disposed. This mounting projection portion 14 is provided with a lens presser and marking means (not shown). A monitor TV 15 (display means) is disposed on an upper portion of the body 8.

The mounting projection portion 14 is provided on its lower portion with a suction plate mounting lever 16 as a jig mounting means in such manner as to be horizontally pivotable about the axial line A-A' and drivable in the vertical direction. Although the pivoting operation and the vertical driving operation of this suction plate mounting lever 16 are effected by hand in this embodiment, they may be effected automatically. This suction plate mounting lever 16 is provided on its intermediate portion with a suction plate holder 17, and a mounting shaft portion 18a of a rubber suction plate 18 as a processing jig is removably held by this suction plate holder 17.

The body 8 is provided therein with a control circuit 19 as shown in 10 Fig. 2. This control circuit 19 includes an arithmetic control portion 20, a data input portion 21, and a data storing memory 22.

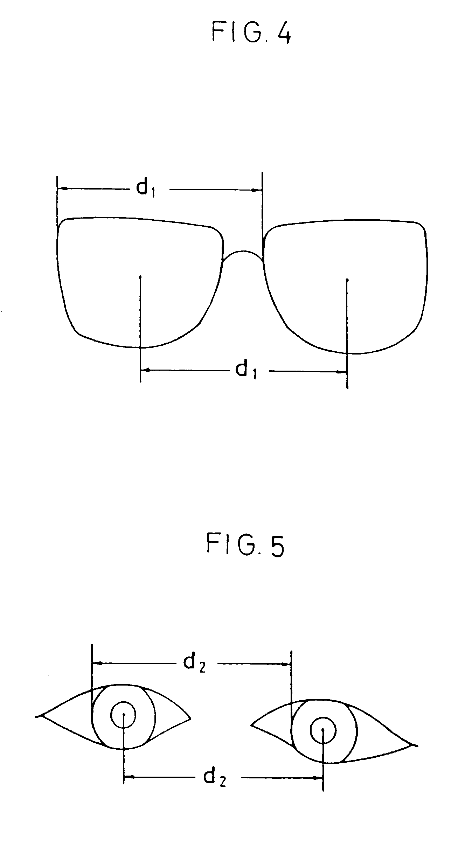

This data input portion 21 comprises a lens diameter input portion 21a (outer periphery information input means of the processing lens L), a frame PD input portion 21b, a pupil PD input portion 21c, a lens data input portion 21d (lens data input means), a displaced amount input portion 21e, etc. Moreover, this data input portion 21 is selected by a mode setting switch 11 as shown in Fig. 1 to input the lens diameter, the frame PD, the pupil PD, the lens data, the displaced amount (moving amount in order to exhibit the prism function), etc. into the arithmetic control portion 20 (arithmetic means). The frame PD input portion 21b and the pupil PD input portion 21C constitute the eye point input means. Also, the frame PD, as shown in Fig. 4, is adapted to show the distance between the centers of the lens frames in two lens frames (framework) F of the spectacle frames MF, that is, the distance d1 between the geometric centers), while the pupil PD, as shown in Fig. 5, is adapted to show the distance between the centers of the pupils in both eyes of the person wearing the spectacles.

In this embodiment, the lens diameter input portion 21a inputs the diameter of the lens through the ten keys 12 on the key board 9. However, if it is designed such that when the lens L is mounted on the lens platform 13, the lens L is automatically measured by the measuring portion 13a, data of a modified lens other than a circular lens can also be input.

Also, the pupil PD input portion 21c and the lens data input portion 21d are designed as such that data are directly input therein from the objective ophthalmoscopic device 3 and the subjective ophthalmoscopic device 4 through on-line, IC card or the like. However, when data are not directly input into the pupil input portion 21c and the lens data input portion 21d from the objective ophthalmoscopic device 3 and the subjective ophthalmoscopic device 4, necessary data are input by means of operation of the mode setting switch 11 and operation of the ten keys 12 on the key board 9 while looking at the prescription, etc. obtained as the result of the measurement by the objective ophthalmoscopic device 3 and the subjective ophthalmoscopic device 4.

Frame configuration data and lens data are input into the arithmetic control portion 20 from the IC card reader 2a of the IC card data record reproducing apparatus 2. Also, a measuring signal is input into the arithmetic control portion 20 from the measuring portion (sensor) 13a disposed on the lens platform 13. The data of the configuration (frame configuration) of the lens frame of the spectacle frame, the distance between the two lens frames or frames PD (distance between the centers of the lens frames), etc. measured by the frame reader 1, and the lens data such as the most suitable trial lens, etc. used at the eye testing by the objective ophthalmoscopic device 3 and the subjective ophthalmoscopic device 4 are input into the IC card reader 2a as the frame configuration information input means of the spectacle frame. In a case that the frame PD can be measured by the frame reader 7, the frame PD is input into the arithmetic control portion 20 through the IC card reader 2a but in a case that the frame PD cannot be measured by the frame reader 7, the frame PD is input from the frame PD input portion 21b by the ten keys 9.

In this embodiment, the lens data which are input into the arithmetic control portion 20 by the card reader 2a or the on-line include the refractive power, the cylindrical power, the axial angle, the displaced amount, the pupil PD (distance between the pupils), etc. of a lens prescribed by the eye inspection.

On the other hand, from the arithmetic control portion 20, the processed data including the data of the configuration of the framework are input into the IC read writer 2b, and the data and the configuration of the lens L, the lens frame, etc. are input into the monitor TV 15 so that they are displayed thereon. This IC read writer 2b inputs data necessary for the grind processing control with respect to the peripheral edge portion of the lens L. Also, the arithmetic control portion 20 drive controls a buzzer 23.

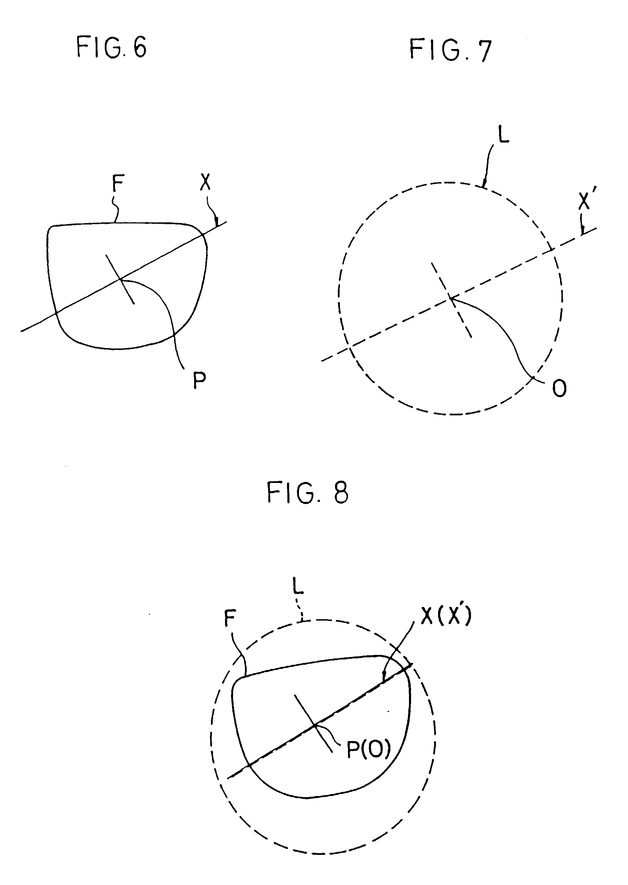

This arithmetic control portion 20 calculates the position of the eye point P (see Fig. 6) in the framework F from the frame PD and pupil PD. And this eye point P and the optical center O of the lens L are brought to be coincident with each other, and the arithmetic control portion 20 calculates whether shortage of the basis material is occurred with respect to the spectacle frame MF (Fig. 3) selected. At this time, the framework F and the lens L are displayed in their overlapped state on the monitor TV 15 so that the shortage of the basis material of the lens can be visually observed. Also, the eye point P of the prescription shown in Fig. 6 and the optical center O of the lens L shown in Fig. 7 are brought to be coincident with each other as shown in Fig. 8 and the astigmatism axis X of the prescription shown in Fig. 6 and the cylindrical axis X" of the lens L shown in Fig. 7 are brought to be coincident with each other as shown in Fig. 8 and displayed in that state.

And when the shortage of the basis material has occurred as the result of the calculation, a message to that effect is displayed on the screen of the TV monitor 15 and an alarm display is also performed by the buzzer 23.

Next, as the result of the calculation, when the shortage of the basis material of the lens L is not occurred, the lens L is mounted on the lens platform 13 and the optical characteristics of the optical center of the lens L are measured. And such measured value is compared with the spherical power and cylindrical power of the lens data already input. If they are found to be different as the result of the comparison, a message to that effect is displayed on the screen of the monitor TV 15 and an alarm display is also made by the buzzer 23. It may be designed such that the lens data are not input into the lens meter and the lens data are compared with the result of the measurement in order to make a "YES" or "NO" judgment for processing the lens.

Furthermore, if the optical characteristics of this lens L are also in accord with the prescription, the frame work F, the eye point P, the astigmatism axis X of the prescription and the optical center O of the lens L, cylindrical axis L which are fixedly displayed on the screen of the monitor TV 15 on the lens platform 13 are brought to be coincident with one another. And by rotating the suction plate mounting lever 16 by 90° after the suction plate 18 is held by the suction plate holder 17 of the suction plate mounting lever 16, the center of the suction plate 18 is brought to be coincident with the optical center O of the lens L. Next, this suction plate mounting lever 16 is pushed down so that the suction plate 18 of the suction plate mounting lever 16 is attracted by the lens L on the lens platform 13. When the suction plate 18 is attracted by the lens L, the center of the suction plate 18 and the optical center O of the lens L are brought to be coincident with each other.

### [Second Embodiment]

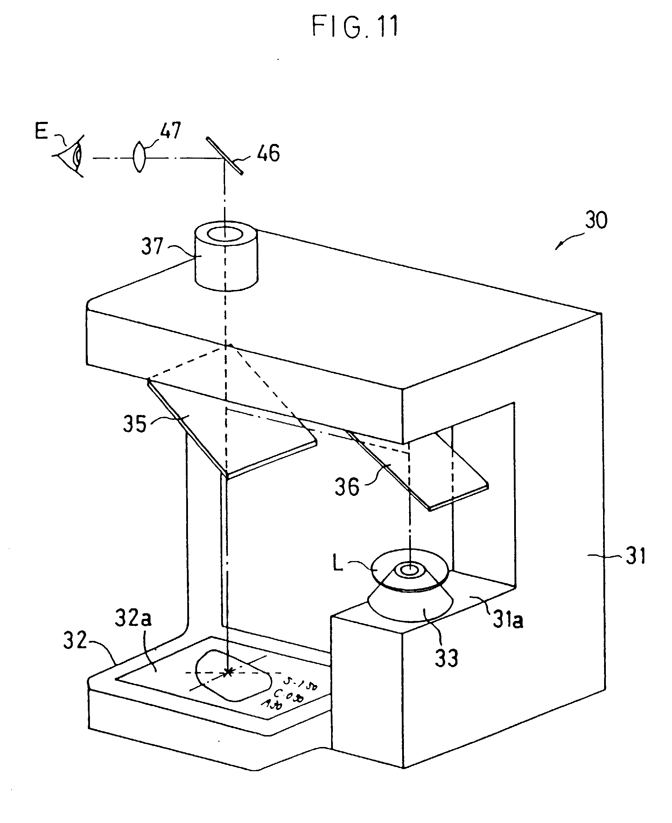

Next, a second embodiment is shown in Figs. 11 through 16.

This lens meter 30 confirms whether the selected lens L will become short in basis material with respect to the spectacles frame (Fig. 3) by optically overlapping the image of the lens L and the displayed image of the lens frame F.

Moreover, in this embodiment, the lens diameter input portion 21a shown in Fig. 2 is omitted and a control circuit is employed in the place of the arithmetic control portion 20' of the arithmetic control portion 20.

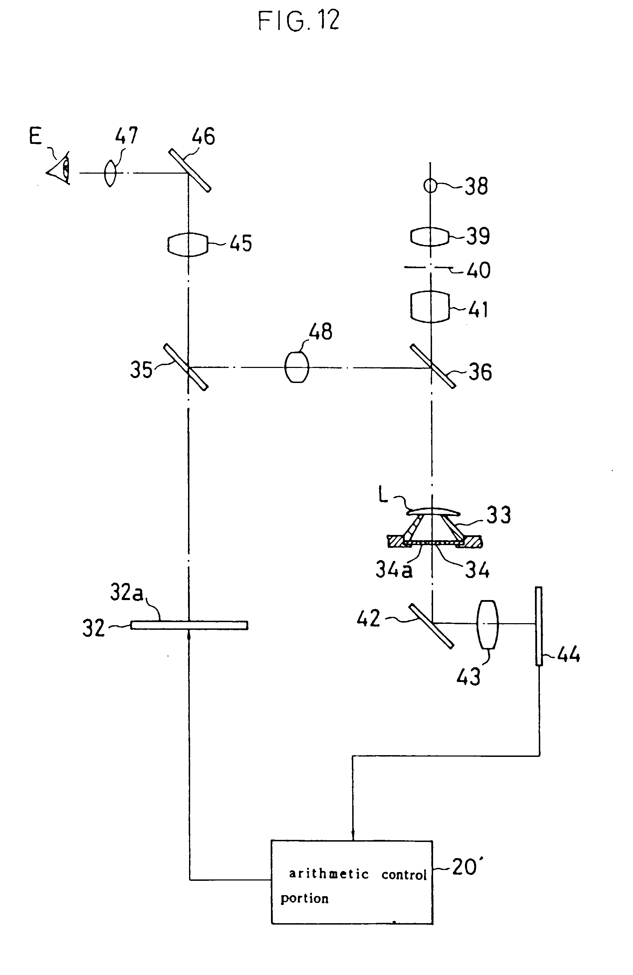

A body 31 of the lens meter 30 shown In Fig. 11 has a generally C-shaped side configuration. A display portion 32 such as, for example, an LCD (liquid crystal displayer) is formed on its bottom portion and a circular truncated cone shaped lens mounting table 33 is disposed on its right-hand side wall 31a which is formed one step higher. The lens mounting table 33 contains therein a ring mask 34 (see Fig. 12) having a ring-shaped light transmitting portion 32a, and half mirrors 35 and 36 are disposed on upper parts of the display portion 32 and the lens mounting table 33 respectively. An opening communicating with a cylinder 37 disposed on the outer surface is formed in an upper part of the body 31 which is disposed above the display portion 32.

As is shown in Fig. 12, the lens meter 30 includes a measuring optical system, and first and second observation optical systems forming the first and second observation optical paths.

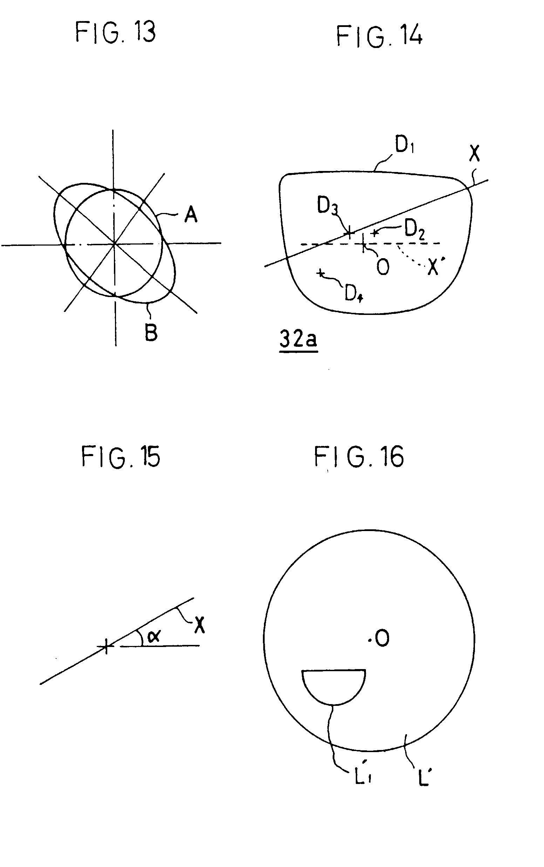

The measuring optical system includes optical members such as a light source 38, a condenser lens 39, a diaphragm mask 40, a collimator lens 41, the half mirror 36, the ring mask 34, a reflecting mirror 42, a focus lens 43 and a CCD 44. And an illuminating light from the light source 38 projects the lens L mounted on the lens mounting table 33 onto the CCD 44 through the condenser lens 39, the diaphragm mask 40, the collimator lens 41, the half mirror 36, the ring mask 34, the reflecting mirror 42, and the focus lens 43. This projection image, as shown in Fig. 13, becomes a ringshaped image A in case there is no cylindrical refraction and it becomes a distorted elliptical image B in case there is the cylindrical refraction. And the optical characteristics of the lens L is measured in the arithmetic control portion 20' by this projection image and the result is displayed on the displaying surface 32a of the display portion 32 as shown in Fig. 11.

The first observation optical system includes optical members such as the display portion 32, the half mirror 35, a lens 45, a reflecting mirror 46, and an ocular 47. And the display portion 32a is projected to an observing eye E through the first observation optical system comprising the half mirror 35, the lens 45, the reflecting mirror 46, the ocular 47, etc.

The second observation optical system includes optical members such as the half mirror 36, a lens 48, the half mirror 35, the lens 45, the ocular 47. And the lens L mounted on the mounting table 33 containing therein the ring mask 34 is projected to the observing eye E through the second observation optical path comprising the half mirror 36, the lens 48, the half mirror 35, the lens 45, the reflecting mirror 46, the ocular 47, etc. The lens 48 is adapted to make the power of the lens L coincident with the display power of the display portion 32.

In this way, the commonly used lens 45, reflecting mirror 46 and ocular 47 among the first and second observation optical paths constitute a common optical path for simultaneously visually confirming the display on the displaying surface 32a of the display portion 32 and the lens L superposed one upon the other.

Also, as is shown in Fig. 14, the arithmetic control portion 20' calculates the data of the prescription in order to display the frame configuration D1, the frame center D2, the pupil center D3, the astigmatism axis X, etc. on the displaying surface 32a. At this time, as is shown in Fig. 15, the astigmatism axis X having a predetermined angle α is displayed.

And by bringing the cylindrical axis X' direction to be coincident with the astigmatism axis X direction and the optical center O to be coincident with the pupil center D3, respectively, by means of, for example, manually adjusting the lens L while looking at the displaying surface 32a, there can be confirmed whether the lens L on the displaying surface 32a will become short in basis material.

Also, when the surface of a lens must be taken into consideration as in a case with a multi focus lens (double focus lens of Fig. 16), etc, the lens surface is observed in order to confirm whether the near-use portion L1' is correctly included in the frame configuration D1. Also, by inputting a near-use pupil PD beforehand, the near-use pupil center D4 may be displayed.

It may be designed such that the astigmatism axis X, the frame configuration D1, the frame center D2, the pupil center D3, etc. displayed on the displaying surface 32a by the arithmetic control portion 20' are displayed in a position where the pupil center D3 and the measuring optical axis of the measuring optical system are coincident with each other, or in a position slightly displaced by a predetermined amount according to necessity, and the cylindrical axis X' of the lens L and the optical axis are brought to be coincident with the pupil center D3. With this construction, by providing the jig mounting means as shown in Fig. 1, the attraction of the suction plate can be effected without moving the lens L after confirmation.

In this embodiment, when there is a difference between the refractive power of the data of the prescription input beforehand and the refractive power of the lens L measured, this difference is detected by warning means and a message to that effect is displayed on the displaying surface 32a. Further, a warning is issued by the buzzer 23, etc. of the first embodiment, for example.

Thanks to the features claimed in claims 1 to 10, the invention allows to make a "YES" or "NO" judgement for processing a lens in accordance with lens processing data.

The invention further allows to cope with a lens in which the optical center is displaced from the center of the external configuration. Even when the lens is a multi-focus lens, etc. other than a single focus lens, correct positional setting can be effected with ease while taking into consideration the outer surface of the lens.

Thanks to the invention it is no more required to train the user for a long time even when it has the astigmatism.

At the same time, there can be prevented such a careless mistake as that a lens different from one as prescribed is processed.

## Claims

1. A lens meter (1) including :
- means for measuring the optical characteristics of a lens to be processed,
- means (13a, 21a) for inputting information about the radius of the outer periphery of said lens (L) ;
- means (7) for inputting information about the shape of a spectacle frame ;
characterized by :
- display means (15) for compositely displaying said lens and a lens rim of said spectacle frame based upon said respective information ; and
- means (14, 16, 17) for mounting a processing jig on said lens measured by said measuring means.

2. A lens meter according to claim 1, characterized in that said outer periphery information inputting means (13a) is means for detecting the radius of said lens (L).

3. A lens meter according to claim 1, characterized in that it further includes means (21b, 21c) for inputting a distance between the center of lens rims of a pair of spectacles and a distance between the pupils of a person to be spectacled.

4. A lens meter according to claim 1, characterized in that it further includes arithmetic means (20) for calculating the optical center of said lens from the optical characteristics of said lens measured by said measuring means and calculating an eye point of a spectacled person located within said lens rim from data input by both said frame shape information inputting means and said distance inputting means ; and said display means (15) compositely displays said lens and said lens rim by causing the eye point calculated by said arithmetic means and the optical center of said lens to coincide with each other.

5. A lens meter according to claim 4, characterized in that it further includes means for inputting data on the eyes of the spectacled person, and said display means superimposes the astigmatism axis of said eye data input by said eye data inputting means upon the eye point of said lens rim shown in a composite image.

6. A lens meter according to claims 4 and 5, characterized in that said arithmetic means (20) forms a "YES" or "NO" judgement by said eye point, lens rim of said spectacle frame, and radius of said lens and causes its result to be displayed on said display means (15).

7. A lens meter according to claim 5, characterized in that said arithmetic means (20) judges whether or not the eye data input by said eye data inputting means and the optical characteristics of said lens measured by said measuring means coincide with each other and causes its result to be displayed on said display means (15).

8. A lens meter (30) including :
- a lens platform (13) on which a lens to be processed is mounted and means for measuring the optical characteristics of the lens (L) mounted on said lens platform (13),
- means (7) for inputting information about the shape of a spectacle frame,
characterized by :
- means (21b, 21c) for inputting a distance between the centers of lens rims of a pair of spectacles and a distance between the pupils of a person wearing said spectacles or inputting a difference between said rim distance and said pupil distance,
- display means (32) for displaying the optical characteristics of the lens measured by said measuring means and the shape of the spectacle frame input by said means for inputting information about the shape of the spectacle frame,
- a first observation optical path (32, 35, 46, 47) for observing a display of said display means,
- a second observation optical path (36, 48, 35, 46, 47) for observing the peripheral configuration and surfaces of the lens mounted on said lens platform, and
- means for mounting a processing jig on said lens measured by said measuring means,
said first and second observation optical paths sharing a common optical path (35, 46, 47) for observing the display of said display means and the lens mounted on said lens platform compositely and simultaneously.

9. A lens meter according to claim 8, characterized in that it further includes means (2a) for inputting data on eyes of a person to be spectacled, and astigmatism axis displaying means (20') for displaying a direction of an astigmatism axis on a display screen of said display means based on the eye date input by said eye data inputting means.

10. A lens meter according to claim 9, characterized in that it further includes means (23) for issuing a warning when a difference has arisen between the refractive power of eye data input by said eye data inputting means and the refractive power of said lens measured by said measuring means.

## Patentansprüche

1. Linsenmeßgerät (1) mit:
- Mitteln zum Messen der optischen Eigenschaften einer zu bearbeitenden Linse,
- Mitteln (13a, 21a) zum Eingeben von Informationen über den Radius des äußeren Umfangs der Linse (L);
- Mitteln (7) zum Eingeben von Informationen über die Form eines Brillengestells;
gekennzeichnet durch:
- Anzeigemittel (15) zum Anzeigen der Linse und einer Linsenrandfassung des Brillengestells in Zusammenstellung auf der Grundlage der jeweiligen Informationen; und
- Mittel (14, 16, 17) zum Befestigen einer Bearbeitungseinspannvorrichtung auf der durch die Mittel zum Messen gemessenen Linse.

2. Linsenmeßgerät nach Anspruch 1, dadurch gekennzeichnet, daß die Mittel zur Eingabe der Informationen des äußeren Umfangs Mittel zum Erfassen des Radius der Linse (L) sind.

3. Linsenmeßgerät nach Anspruch 1, dadurch gekennzeichnet, daß weiterhin Mittel (21b, 21c) zum Eingeben eines Abstandes zwischen der Mitte der Linsenrandfassungen einer Brille und eines Abstandes zwischen den Pupillen einer zu bebrillenden Person vorgesehen sind.

4. Linsenmeßgerät nach Anspruch 1, dadurch gekennzeichnet, daß weiterhin arithmetische Mittel (20) zum Berechnen der optischen Mitte der Linse aus den optischen Eigenschaften der durch die Mittel zum Messen gemessenen Linse und zum Berechnen eines in der Linsenrandfassung angeordneten Augenpunktes einer bebrillten Person aus Daten, die sowohl über die Mittel zum Eingeben der Information der Form des Gestells als auch über die Mittel zum Eingeben des Abstandes eingegeben wurden, vorgesehen sind und daß die Mittel zum Anzeigen (15) in Zusammenschau die Linse und die Linsenrandfassung anzeigen, indem der durch die arithmetischen Mittel berechnete Augenpunkt und die optische Mitte der Linse übereinstimmend gemacht werden.

5. Linsenmeßgerät nach Anspruch 4, dadurch gekennzeichnet, daß weiterhin Mittel zum Eingeben von Daten über die Augen der bebrillten Person vorgesehen sind und daß die Anzeigemittel die Astigmatismusachse der über die Mittel zum Eingeben der Augendaten eingegebenen Augendaten mit dem Augenpunkt der in einem zusammengesetzten Bild gezeigten Linsenrandfassung überlagert.

6. Linsenmeßgerät nach Anspruch 4 und Anspruch 5, dadurch gekennzeichnet, daß die arithmetischen Mittel (20) eine "JA"- oder "NEIN"-Bewertung durch den Augenpunkt, die Linsenrandfassung des Brillengestells und den Radius der Linse bilden und eine Anzeige ihres Ergebnisses auf den Anzeigemitteln bewirken.

7. Linsenmeßgerät nach Anspruch 5, dadurch gekennzeichnet, daß die arithmetischen Mittel (20) entscheiden, ob die über die Mittel zum Eingeben von Augendaten eingegebenen Augendaten und die optischen Eigenschaften der von den Mitteln zum Messen gemessenen Linse miteinander übereinstimmen oder nicht und bewirken, daß das Ergebnis auf den Anzeigemitteln angezeigt wird.

8. Linsenmeßgerät (30) mit:
- einer Linsenplattform (13), auf der eine zu bearbeitende Linse angeordnet ist, und Mitteln zum Messen der optischen Eigenschaften der auf der Linsenplattform (13) angeordneten Linse (L),
- Mitteln zum Eingeben von Informationen über die Form eines Brillengestells,
gekennzeichnet durch:
- Mittel (21b, 21c) zum Eingeben eines Abstandes zwischen den Mitten von Linsenrandfassungen einer Brille und eines Abstandes zwischen den Pupillen einer die Brille tragenden Person oder zum Eingeben einer Differenz zwischen dem Randfassungsabstand und dem Pupillenabstand,
- Anzeigemittel (32) zum Anzeigen der optischen Eigenschaften der durch die Mittel zum Messen gemessenen Linse und der Form des Brillengestells, die über die Mittel zur Eingabe von Informationen über die Form des Brillengestells eingegeben wurden,
- einen ersten Beobachtungsstrahlengang (32, 35, 46, 47) zum Beobachten einer Anzeige der Anzeigemittel,
- einen zweiten Beobachtungsstrahlengang (36, 48, 35, 46, 47) zum Beobachten der Umfangskonfiguration und der Flächen der auf der Linsenplattform angeordneten Linse und
- Mittel zum Befestigen einer Bearbeitungseinspannvorrichtung auf der von den Mitteln zum Messen gemessenen Linse.

9. Linsenmeßgerät nach Anspruch 8, dadurch gekennzeichnet, daß weiterhin Mittel (2a) zum Eingeben von Daten über die Augen einer zu bebrillenden Person und Mittel zum Anzeigen einer Astigmatismusachse (20') zum Anzeigen einer Richtung einer Astigmatismusachse auf dem Anzeigeschirm der Mittel zum Anzeigen auf der Grundlage der über die Mittel zum Eingeben von Augendaten eingegebenen Augendaten vorgesehen sind.

10. Linsenmeßgerät nach Anspruch 9, dadurch gekennzeichnet, daß weiterhin Mittel (23) zur Abgabe einer Warnung vorgesehen sind, wenn eine Differenz zwischen dem Brechungsvermögen der über die Mittel zum Eingeben von Augendaten eingegebenen Augendaten und dem Brechungsvermögen der von den Mitteln zum Messen gemessenen Linse aufgetreten ist.

## Revendications

1. Mesureur de lentille (1) comprenant :
- des moyens pour mesurer les caractéristiques optiques d'une lentille à traiter,
- des moyens (13a, 21a) pour introduire des informations de rayon de la périphérie extérieure de ladite lentille (L) ;
- des moyens (7) pour introduire des informations de forme de la monture de lunette ;
caractérisé par :
- des moyens d'affichage (15) pour afficher de manière composite ladite lentille et un bord de lentille de ladite monture de lunette en fonction desdites informations respectives ; et
- des moyens (14, 16, 17) pour installer une monture de traitement sur ladite lentille mesurée par lesdits moyens de mesure.

2. Mesureur de lentille selon la revendication 1, caractérisé en ce que lesdits moyens d'introduction des informations de périphérie extérieure (13a) sont des moyens pour détecter le rayon de ladite lentille (L).

3. Mesureur de lentille selon la revendication 1, caractérisé en ce qu'il comprend en outre des moyens (21b, 21c) pour introduire une distance entre le centre des bords de lentille d'une paire de lunettes et une distance entre les pupilles d'une personne devant porter les lunettes.

4. Mesureur de lentille selon la revendication 1, caractérisé en ce qu'il comprend en outre des moyens arithmétiques (20) pour calculer le centre optique de ladite lentille à partir des caractéristiques optiques de ladite lentille mesurées par lesdits moyens de mesure et pour calculer un point de l'oeil de la personne portant les lunettes placé à l'intérieur dudit bord de lentille à partir des données introduites à la fois par lesdits moyens d'introduction des informations de forme de monture et lesdits moyens d'introduction de distance ; et en ce que lesdits moyens d'affichage (15) affichent de manière composite ladite lentille et ledit bord de lentille en faisant coïncider le point de l'oeil calculé par lesdits moyens arithmétiques et le centre optique de ladite lentille.

5. Mesureur de lentille selon la revendication 4, caractérisé en ce qu'il comprend en outre des moyens pour introduire des données des yeux de la personne portant des lunettes, et en ce que lesdits moyens d'affichage superposent l'axe d'astigmatisme desdites données de l'oeil introduites par lesdits moyens d'introduction des données de l'oeil avec le point de l'oeil placé à l'intérieur dudit bord de lentille, représentés sur une image composite.

6. Mesureur de lentille selon les revendications 4 et 5, caractérisé en ce que lesdits moyens arithmétiques (20) forment un jugement par "OUI" ou "NON" à partir dudit point de l'oeil, du bord de lentille de ladite monture de lunettes, et du rayon de ladite lentille et font afficher le résultat sur lesdits moyens d'affichage (15).

7. Mesureur de lentille selon la revendication 5, caractérisé en ce que lesdits moyens arithmétiques (20) jugent si oui ou non les données de l'oeil introduites par lesdits moyens d'introduction des données de l'oeil et les caractéristiques optiques de ladite lentille mesurées par lesdits moyens de mesure coïncident, et font afficher le résultat sur lesdits moyens d'affichage (15).

8. Mesureur de lentille (30) comprenant :
- une platine à lentille (13) sur laquelle est montée une lentille à traiter et des moyens pour mesurer les caractéristiques optiques de la lentille (L) montée sur ladite platine à lentille (13),
- des moyens (7) pour introduire des informations de forme d'une monture de lunettes ;
caractérisé par :
- des moyens (21b, 21c) pour introduire une distance entre les centres des bords de lentille d'une paire de lunettes et une distance entre les pupilles d'une personne portant lesdites lunettes ou pour introduire une différence entre ladite distance des bords et ladite distance des pupilles,
- des moyens d'affichage (32) pour afficher les caractéristiques optiques de la lentille mesurées par lesdits moyens de mesure et la forme de la monture de lunettes introduite par lesdits moyens d'introduction d'informations de forme de monture de lunettes,
- un premier chemin optique d'observation (32, 35, 46, 47) pour observer un affichage desdits moyens d'affichage,
- un second chemin optique d'observation (36, 48, 35, 46, 47) pour observer la configuration périphérique et les surfaces de la lentille montée sur ladite platine à lentille, et
- des moyens pour installer une monture de traitement sur ladite lentille mesurée par lesdits moyens de mesure,
lesdits premier et second chemins optiques d'observation partageant un chemin optique commun (35, 46, 47) pour observer l'affichage desdits moyens d'affichage et de la lentille montée sur ladite platine à lentille de manière composite et simultanée.

9. Mesureur de lentille selon la revendication 8, caractérisé en ce qu'il comprend en otre des moyens (2a) pour introduire des données des yeux d'une personne devant porter des lunettes, et des moyens d'affichage d'un axe d'astigmatisme (20') pour afficher une direction d'un axe d'astigmatisme sur un écran d'affichage desdits moyens d'affichage en fonction des données des yeux introduites par lesdits moyens d'introduction des données des yeux.

10. Mesureur de lentille selon la revendication 9, caractérisé en ce qu'il comprend en outre des moyens (23) pour émettre un avertissement lorsqu'une différence est intervenue entre le pouvoir de réfraction des données des yeux introduites par lesdits moyens d'introduction des données des yeux et le pouvoir de réfraction de ladite lentille, mesuré par lesdits moyens de mesure.
